Europäisches Patentamt

European Patent Office

Office européen des brevets

(11) Publication number: **0 185 122**
A1

## EUROPEAN PATENT APPLICATION

(21) Application number: 84402352.3

(22) Date of filing: 19.11.84

(51) Int. Cl.⁴: **H 04 L 11/16**

(43) Date of publication of application:
25.06.86 Bulletin 86/26

(84) Designated Contracting States:
DE FR GB

(71) Applicant: **Aetna Telecommunications Laboratories**
**131 Flanders Road**
**Westboro Massachusetts 01581(US)**

(72) Inventor: **Barr, Paul**
**15 Bellwood Way**
**Framingham Massachusetts 01701(US)**

(72) Inventor: **Woo, Leon K.**
**11 Doyle Circle**
**Framingham Massachusetts 01701(US)**

(74) Representative: **Descourtieux, Philippe et al,**
**CABINET BEAU de LOMENIE 55 rue d'Amsterdam**
**F-75008 Paris(FR)**

(54) Three level distributed control for networking I/O devices.

(57) A three level microprocessor based nodal architecture for a local area network communication system is disclosed.

The processing responsibility for establishing a communication link between an initiating I/O device and a recipient I/O device and for subsequent two way data exchange between the initiating and recipient devices are shared between three levels 1, 2, 3 of digital processing capability in such a manner as to demand the least amount of time from the highest, most intelligent processing level (1) common to all devices. Each I/O device whether it be a digital terminal, computer or telephone set interfaces with the nodal system through a middle level of processors (20). Voice, video or data can be sent externally of the node (12) via a coupling network (14), or routed back through the node (12) to another middle level processor (20) to an associated I/O device. A priority scheme utilizing a separate control data channel coupling the plural nodes at the third processor level (3) operates to maintain substantially full data density on the data coupling network.

EP 0 185 122 A1

./...

Fig. 1

<u>Three Level Distributed Control for Networking I/O</u>
<u>Devices.</u>

<u>FIELD AND BACKGROUND OF THE INVENTION</u>

The present invention relates to local area network systems in which simultaneous voice, data and video communication between an initiating and recipient device located within the same or distinct nodes is accomplished. Since any such system must have the capability for connecting any station with another station within the entire coverage area of the network, a great deal of complexity can be rapidly built into the system in order to provide such full service coverage. Utilizing digital processing techniques and available logical processor capabilities, it is possible to accomodate the demands of such networking to a great extent.

Efficient utilization of even a processor based networking system requires the efficient interplay of : (1) a directory function to identify, from an enormous repertory of subscriber addresses, a desired address for an identified recipient device from any initiating device; (2) the processing of that information to establish and maintain the communication link between the initiating and recipient devices; and (3) the function of information exchange for a large number of simultaneous exchanges.

These substantial demands can and have been met in the past by expensive arrays of processing capability utilizing in some cases multiple processors and shared processing capacity.

<u>BRIEF SUMMARY OF THE INVENTION</u>

In accordance with the teaching of the present invention the processing functions required for establishing and maintaining a high level of voice, video and data communications between originating and recipient devices distributed over a communication network of multiple nodes is accomplished by distributing
the processing function within each node between three
levels of processing capability. A first level processor
on the highest level provides initial processing on an
interrupt basis of a request for communication from any
originating I/O device within the node and rapidly
accesses, at character transmission rates, routing information for the desired recipient device, while monitoring call progress until a connection is made. The high
level processor then drops out. The routing information
is in turn passed on to a second level processor system
associated on a data bus with a cluster of devices, one
of which is the originating device of the communication
request. The routing information received at the second
processor level from the directory in the top level processor is utilized at the second processor level to format
both information and addressing data into queues and
data registers, where they are available for extraction
by a third level processor which acts on the routing
information to distribute the data packet in according
with that routing information either back to another
cluster of communication devices within the same node or
out over a network coupler, typically a passive star
optical fiber network, to other nodes for distribution
to the addressed recipient there.

The division of communication responsibility in this manner greatly improves the efficiency
of each local area network node. The directory function
for generating routing information for a desired communication between any two or more devices is centralized
in a single processor at the highest level and the demands
upon its time are minimized by passing control from it to
the second and third level processors as soon as the
routing information is established and a connection
between devices made. Directory updating is also simplified by the need to access/modify information in only one data base. The actual control over communication between devices is then distributed between a number of small processors, typically inexpensive microprocessors, which efficiently maintain a large number of communications simultaneously. The substantially largest task of routing voices, video or data signals for transmission or receipt by individual devices is accomplished at the middle level of distributed processors, utilizing efficient high density, high speed burst transmission of data packets.

The communication routing external of a node is made by the third level processor through communication logic utilizing a priority scheme which occupies the real time communication ability of the linkage through a passive star or other mechanism to other nodes on a 100% message density basis along a message link. This high density is achieved by using a separate control link between nodes over which a repeating time frame is cut into segments occupied by requests for transmission from each node. Alternating with the request subframe is a subframe of grants, one corresponding to each of the nodes in the network. In each grant, a corresponding node transmits its determination of the next node to transmit according to the same algorithm which is based upon the node having the highest priority message and longest wait. All grants should be identical, which serves as an error check, and the identified node is then operative to transmit communication information over the message link during the subsequent frame. The process keeps repeating, allowing the node with the highest priority and longest wait to be the next to go. Because of the need for real time communication for voice and video signals, the priority algorithm assigns to those the highest priority, handling all requests for such communication first.

The three level hierarchy and distribution of communication functions between them minimizes the amount of burst transfers required within a node to a maximum of two to accomplish any information transfer function and a maximum of four transfers where more than one node is involved. Similarly, the separate control link insures that the message link will be completely full of information at all times as long as information is waiting, thereby allowing maximum communication rate between nodes.

DESCRIPTION OF THE DRAWING

These and other features of the present invention are more fully sent forth below in the solely exemplary detailed description and accompanying drawing of which :

Fig. 1 is a generalized block diagram of a local area network illustrating the distribution within a single node of processing functions between three levels of processors ;

Fig. 2 is a detailed block diagram illustrating the component structure of a single node for use within the Fig. 1 architecture ;

Fig. 3 is a detailed circuit diagram of a portion of the circuit node of Fig. 2 comprising the data handling capability for voice or digital signal transfer between second and third level processing functions;

Figs. 4A, 4B and 4C are respectively a diagram illustrating network architecture, address formatting, and a device address directory;

Fig. 5 is a timing diagram illustrating the operation and timing of the priority switching of communication between nodes over a coupling network;

Fig. 6 is an algorithm illustrating the operation of a node according to Fig. 2 for establishing a communication link and for generating communication data for exchange between devices within the same or different nodes; and

Fig. 7 is a processing algorithm illustrating the operation of the third level node in a priority transmission scheme with other nodes associated through a single coupling network to identify the next node to transmit over the network.

DETAILED DESCRIPTION

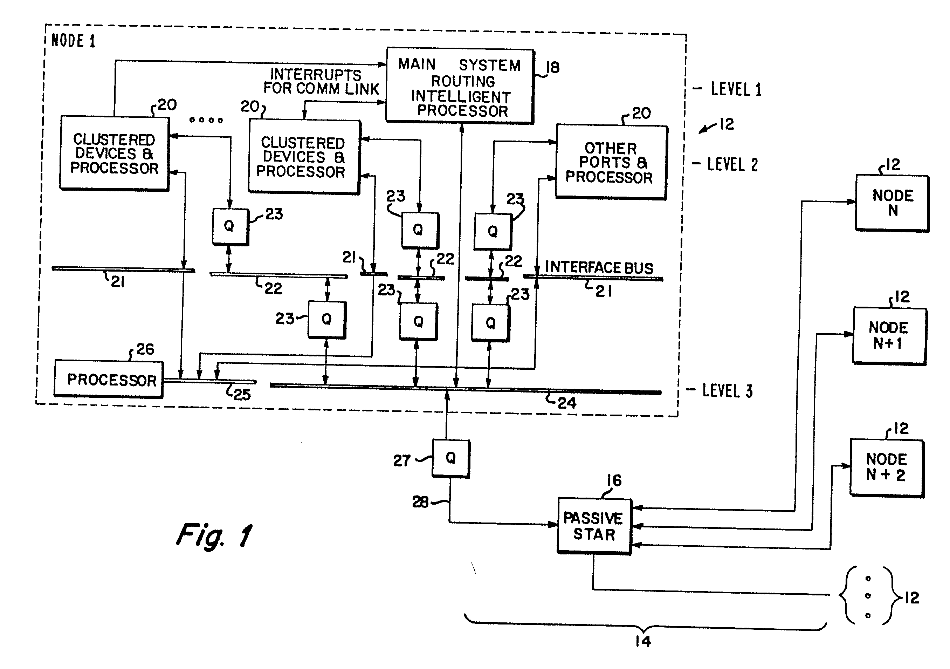

The present invention contemplates a local area networking system as illustrated in Fig. 1 in which a plurality of nodes 12 are interconnected through a communication network 14 typically comprising a fiber optic communication path coupled through a passive star 16.

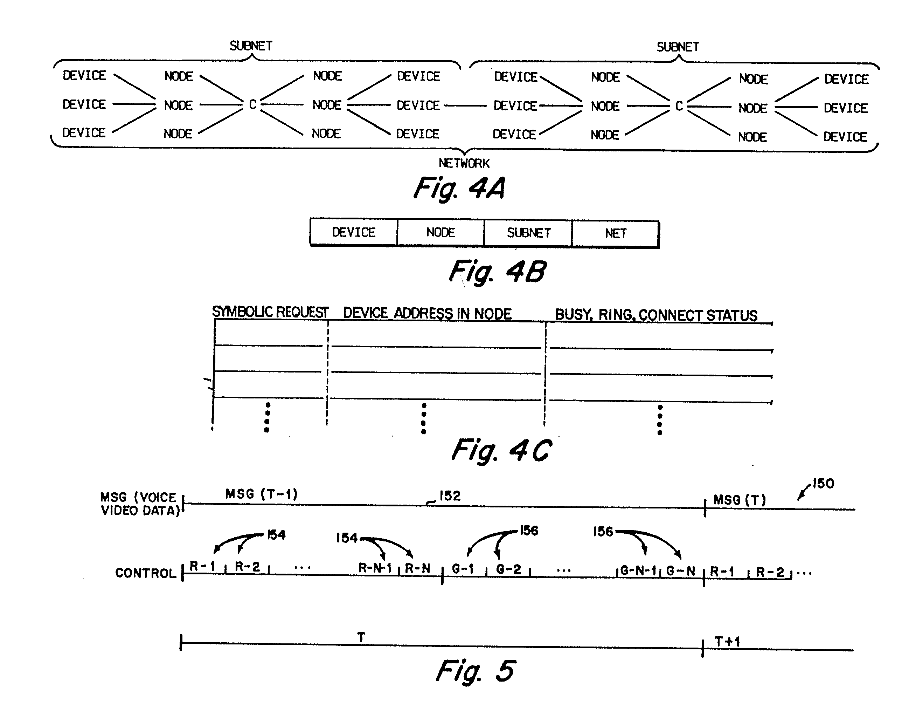

A typical network or local area network is illustrated in Fig. 4A. As shown there, devices are associated with nodes through which they may communicate to each other without their signals ever leaving the node. A subnetwork is formed by coupling together several nodes through a coupling device C. In the case of the present invention, a preferred coupler utilizes optical fiber interconnecting mechanisms. One or more devices within a node may comprise porting mechanisms that communicate with other similar devices in a node or nodes of other subnetworks. By allowing communication between such devices in different subnetworks, the subnetworks can be associated together to form networks, or local area networks.

Fig. 4B illustrates an addressing scheme utilized in the present invention to identify , within a group of networks, a particular device. The scheme of Fig. 4B devotes 32 bits to the particular device address, allotting 8 bits to denote the network, 8 bits to the subnetwork, 8 bits to the node, and 8 bits to the device within the node. A very large number of devices can be uniquely identified by such a format.

Within a single node 12 the communication function is distributed between three levels. The first level comprises a computer and associated memory and secondary storage operating with the system software identified in Table I as the main system routing. It comprises the most intelligent processor 18. The processor 18 maintains in secondary storage a directory of identification and routing directions for all devices within its node 12. Device addresses for other nodes 12 are accessed through the local area network as discussed below. The devices, representing the I/O capability of individual subscribers, are typically clustered in 64 groups 20 comprising typically four individual devices such as telephone sets, data terminals, video systems, computers, etc. and have associated therewith a second level microprocessor. A request to establish communications, such as an offhook indication plus a dialed number, is established as an interrupt to the main computer system 18.

The dialed number is utilized by the highest level processor 18 to access a directory of addresses for the devices within that processor's node. An exemplary directory is illustrated in Fig. 4C. As shown there, the directory consists of a series of storage addresses corresponding to the number of the requested device generated by the requesting device. Correlated with each address is a set of routing codes for the requested device, if it exists within the same node, along with a set of binary bits which the processor controls to indicate the status of the requested or addressed device. These bits include bits to indicate a busy or Off Hook status for the device, the status of that device receiving a ring signal, and the condition for that device being interconnected with another device.

If the directory of the local processor 18 for the requesting device does not contain such an entry for the requested device, it indicates that the requested device is not present within that local node. As described below, the processor 18 then composes a message for transmission to other nodes seeking the node having the requested device.

When the requested device is located, the processor associated with the node of the requested device detects its status. If that status indicates a busy condition, the requesting device is so signalled by its local processor 18. Otherwise the requested device is caused to ring and its subsequent Off Hook status institutes communication between the devices in a data block transfer mode. The communication prior to this point had occurred at character rate, insuring optimum speed in the communication and minimizing the amount of time that the attention of the highest level processor must be diverted to handling the communication initiating function. The conversion to block rate occurs after the processor 18 receives from its storage or the storage of the processor 18 in a remote node the routing instructions from the directory of Fig. 4C for communication to the requested device along with an indication of Off Hook for both devices. This information is provided to the processor(s) associated with the requesting device in one of the clusters 20. The requested device processor receives the complementary routing data for the requesting device. At this point the high level processor(s) 18 drops out of the communication function for information exchange between the requesting and recipient devices, all subsequent processing being handled by level two and three processors.

The micropressor(s) associated at level 2 with the requesting and requested devices in the corresponding cluster(s) 20 formats information for transmission between the devices as a combination of information signals that are block transferred between FIFO queues 23 over a data bus 22. Source and destination queues 23 are identified over a control bus 21 from routing provided by a processor 18. A control bus 25 serviced by a third level microprocessor 26 sets source and destination controls for block transfer between queues 23 over a send data bus 24. If the routing is to a device within the node, the source and destination control set up over bus 25 will execute block transfer between queues 23. If the requested device is outside the node, routing will be between queues 23 and a queue 27 used for block transfer over the coupler link 14.

In this manner, the processing function for handling all of the information assemblage and interfacing with the individual devices occurs with a set of distributed processors grouped in clusters 20 at the second level. The actual information exchange is then simplified for routing by the processor 26 in the most efficient manner.

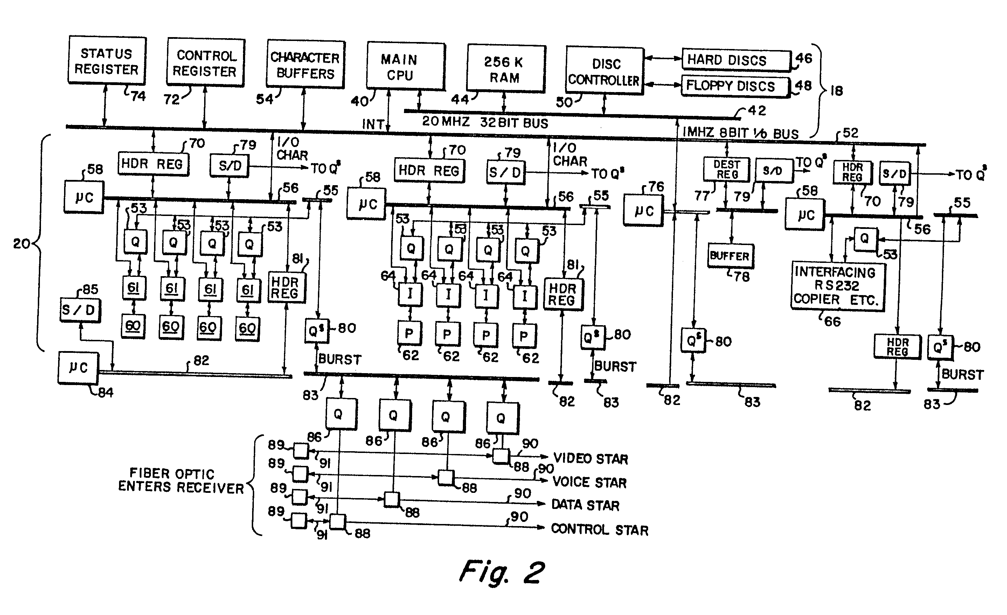

The details of an individual node 12 illustrated in Fig. 1 are shown with respect to Fig. 2 identifying individual component elements responsible for accomplishing the networking function.

The system illustrated in Fig. 2 shows the main system routing processor 18 to include a central processor unit 40, which may be a 32 bit microprocessor, programmed in accord with the Table I C-Language Coding, associated over a high speed data bus 42 with an internal RAM memory 44 and mass storage memories 46 and 48 in the form of hard disks and floppy disks associated with the bus 42 through a conventional disk controller 50. A data bus 52, typically a one mega byte input/output bus, communicates with the CPU 40 on the one hand to exchange data at a character rate with individual clusters 20. In the case of data exchange with digital devices, character buffers 54 provide buffering for the access rights on handshaking routines to set up communication. For voice, they provide tone to ASCII conversion.

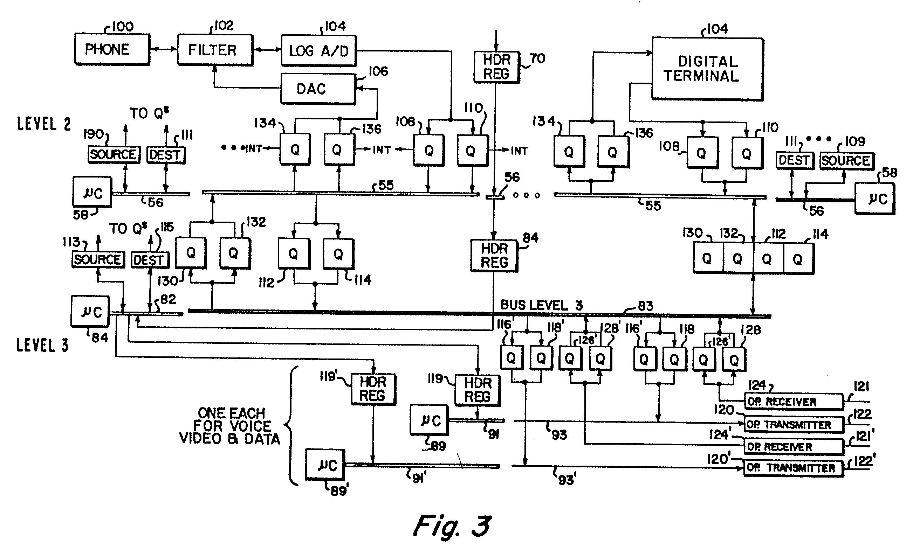

Each cluster 20 is illustrated to comprise an interface or control bus 56 associated with a microcontroller 58. The bus 56 communicates with a plurality of devices such as a set of four data terminals 60 illustrated in one cluster 20 or a set of four conventional telephone sets 62 illustrated in a second one of the clusters 20. Typically each of the telephone sets 62 is coupled for message transfer to a data bus 55 through an interface circuit 64 and FIFO queue 53 described below with respect to Fig. 3. The digital terminals are connected through a digital interface 61 and FIFO queue 53 to the data bus 55 associated with its microcontroller 58.

Other interfacing functions and components such as an interfacing system 66 using one or more types of interfacing logic such as that corresponding to the RS232 interfacer for operation with other data equipment or a further network may be associated with the data and control buses 56, 55 of yet another cluster 20.

Associated with each control bus 56 of the clusters 20 is a header register 70 connected between the bus 52 and control bus 56 to contain routing data set there by CPU 40 appropriate to each device communication being established, or ongoing. The data in this register is accessed by the level two controller 58 to set up source and destination codes in registers 79 that control the transfer of data between the queues on bus 55. A status register 74 functions to hold a request for communication for each device in a cluster 20. The CPU 40 scans these registers to identify interrupting devices requesting service. A set of control registers 72 are associated with each device 60, 62 and are set by the CPU 40 to cause a particular device to receive and indicate a dial tone, busy signal or ring back, and to identify to that device whether it is in a character or burst data mode.

The main routing computer system 18 may be addressed on its bus 42 directly through a cluster comprising a microcontroller 76, data and control buses 55, 56, destination register 77 and buffer storage 78 associated with control bus 56 along with queues 80. Such a connection may be utilized, for example, for electronic or voice mail or mass data transfer to and from the records, such as disks 46 and 48, of the central computer system 18. It functions substantially the same as the other level two systems.

The control buses 56 set source and destination registers 79 that control communication through a set of queuing registers 80, according to data in header registers 70. A second set of header registers 81 are associated with a microcontroller 84 to define the third level of communication processing. The header registers 81 store the data in registers 70. The controller 84 uses the data in the header registers, identifying routing, to set source and destination codes in registers 85 over a control bus 82. At any instant of time these control the flow of data between the queues 80 and 86 on a data bus 83. Separate queuing registers 86 typically provided as four sets of registers, one for each of video, voice, data or control information channels, assemble data which is to be or has been transformed by an optical transmitter/receiver pair 88 for two way optical communication over the respective optical fiber cables 90 to a corresponding fiber optic coupler, such as a passive star coupler. The transmitter/
receiver pairs 88 are controlled by control logic 89
over buses 91.

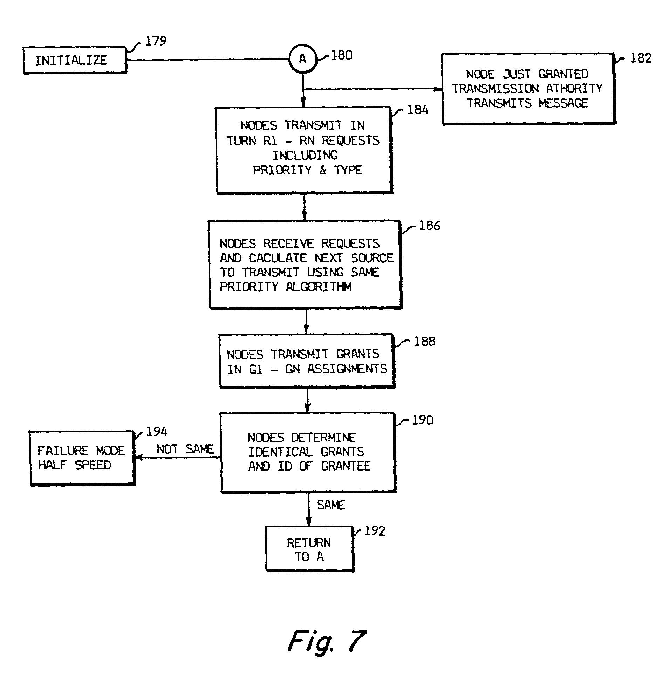

All processors 58, 84 and 89 may be
model 8X305, 8X310 processors with associated RAM/ROM
memory to contain their programming as shown in
micro-code in Table II. System speed typically increases
with each downward level in order to accommodate the increasing information density. It is thus preferably
that logic 89 be hard wired to provide simultaneous
control of step execution specified in Fig. 7.

Fig. 3 illustrates circuit details
of clusters 20 and the queues 80 and 86, along with
one of four transmitter/receiver pairs 88 and logic
89 and buses 91. In the case where the subscriber
device comprises a telephone hand set 100 a filter network 102 provides bandpass matching of the telephone
voice signal for application through a logarithmic
analog-to-digital converter 104 or for transient
filtering of the switching transients in the digital-
to-analog conversion of a digital-to-analog converter 106.
Converter 104 (AMD AM 7901) is selectively controlled
by CPU 40 for log or linear operation. The output from
the analog-to-digital converter 104 is applied to a set
of queues 108 and 110. While one queue is accumulating
a package of digital data for burst transmission, the
adjacent queues 110 is transmitting the previously
accumulated digital packet as a data burst. Each queue
108, 110 provides an output signal indicating its need
for emptying as an interrupt signal. The associated
microcontroller 58 receives both routing data from the
header register 70 and the interrupts and sets control
codes into source and destination registers 109 and 111
on control bus 56 to define the order of data flow
in bursts from ones of the queues 108, 110 associated with each of the devices through data bus 55. The information is processed on the most urgent basis (i.e. FIFO) and is applied to the data bus 55 so that it will be picked up by a complementary set of data queues 112 and 114 coupling the data bus 55 to the data bus 83, associated with the third level microcontroller 84. In the event information is destined for a device in the same cluster 20, queues 134 and 136 will receive the bursts. In a similar manner, the microcontroller 84 will respond to data in header register 81 defining routing outside the node and interrupts from queues 112 and 114 defining timing to set source and destination registers 113 and 115 to control the flow of burst of data from one of the queues 112 or 114 through data bus 83 to ones of four sets of output queues 116 or 118. If data is destined to a device within the node, one of queues 130, 132 leading to bus 55 of another cluster is used.

Data thus processed by the microcontroller 84, is assembled from the queues as data packages and applied into the data queues 116 and 118. Control logic 89 applies the data in the queues 116 and 118 to an optical transmitter system 120. Logic 89 accesses a header register 119 on control bus 91 to include addressing information in the data burst of queues 116, 118. Transmitter 120 converts the electrical signals into optical modulation for coupling into an optical fiber 122 and thence over the optical coupler system 14. The only difference is that header information is now transmitted as part of the outgoing data. The system of queues 116 and 118 is repeated for each of the communication channels utilized for voice, video, data and control purposes described above with respect to Fig. 2. The control channel is shown in Fig. 3 with all elements primed.

Data is received as optical signals on a fiber 121 and is converted to electrical counterparts by an optical receiver 124 and applied, under control of registers 113 and 115 set by processor 84, through a complementary set of queues 126 and 128 using the same data routing techniques in the reverse direction. The queues 126 and 128 provide data to the bus 83 where the source and destination registers 113 and 115 set by the controller 84 control the routing into one of the cluster 20 queue sets 130 and 132 used to block transfer data from the bus 83 to bus 55. In similar fashion, the source and destination registers 109 and 111 set by the microcontroller 58 at the second level route information in the queues 130, 132, through the bus 55, to the appropriate ones of the queues 134 and 136 that directly apply information to the ultimate subscriber device.

In the case where the originating or recipient device is a digital terminal 140 rather than a voice terminal, a similar set of queues 108, 110, 134, and 136 are utilized for communication through the data bus 55 associated with the cluster microcontroller 58 and associated source and destination registers 109 and 111 controlling that flow of data communication.

The transmission system from the data bus 83 through the system of queues 116, 118, and optical transmitter system 120 is governed by a priority scheme operative within the microcontroller 84 and logic 89, and described with respect to the algorithm of Fig. 7, utilizing the time framing illustrated in Fig. 5. As shown there, a timing diagram 150 is broken into a series of time frames 152 for the transmission, by one of the nodes 12 in the system, of a message packet. The determination of which node will transmit for each time frame 152 is determined by transmission over a control link as illustrated by the primed numbers in Fig. 3. The time frame 152 on the control link is divided into a set of time slots (or bit groups) 154 each associated with one of the nodes 12 followed by set of time slots 156, also each associated with one of the nodes. During the time slots 154, each node transmits in its associated time slot only a request for transmission comprising the identity of the type of information awaiting transmission if any. Each of the nodes receives this information as distributed throughout the network 14 and makes a determination according to an identical priority algorithm as to which station should transmit information in the next occurring information time frame 152. That determination is made upon the basis of the node having the longest interval from its last opportunity to transmit. The identity of the node to transmit is then communicated by each node in its corresponding time slot 156 as a grant of communication authority to that node. If all grants are identical, indicating each node is processing information according to the same priority scheme accurately, in the next subsequent time frame 152 the identified node will automatically transmit a data burst through its queuing system during the entire time slot 152. In this manner as long as there is a node awaiting to transmit information, the entire time available for transmission on the message links will be fully utilized. Typically, the priority scheme will give priority to voice and video communications because of its real time requirements, handling digital information exchange after all awaiting voice communications have been handled.

The main computer 18, according to the programming as exemplified by Table 1, keeps track of the numbers of voice, data, etc. communications going on simultaneously and has a maximum number of voice communications which the node will handle simultaneously before overloading the transmission system so that a voice communication has to wait an unacceptably long period of time, thereby creating a perceived communication delay between the users. This information is contained within the system program. With a request for communication when the maximum number of voice channels has been reached, control register 72 will cause the requesting devices to be placed in a busy signal condition.

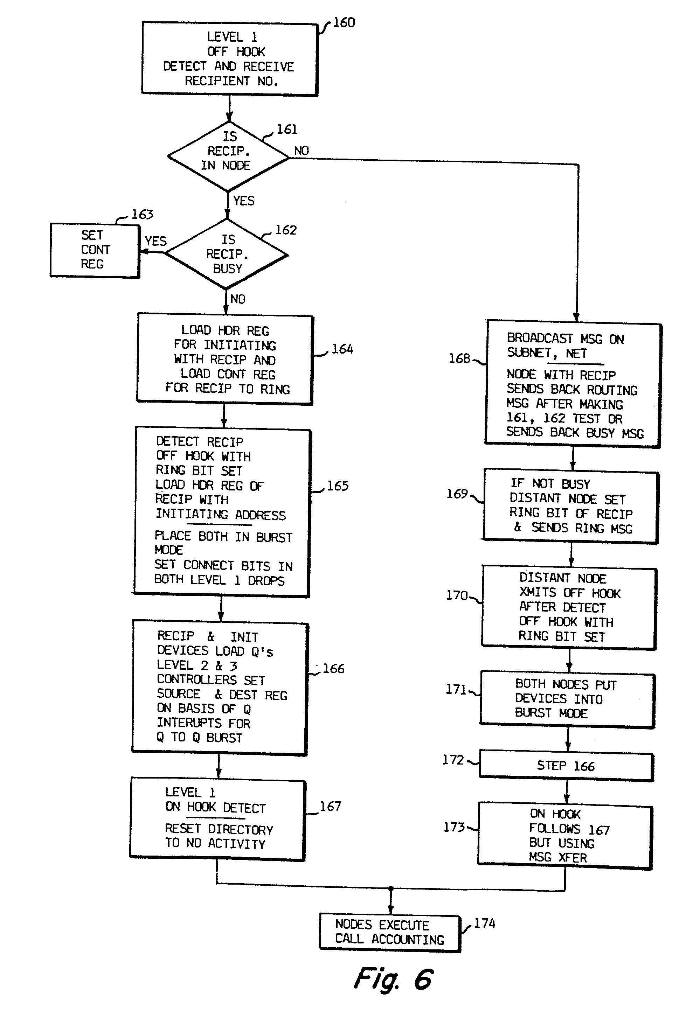

These and other functions of the CPU 40 are accomplished by the Table I programming. Fig. 6 is an algorithmic representation of that programming as it affects system operation according to the present invention. As shown therein, the initial response by the system to a requesting or initiating device going Off Hook is detection of that by the CPU 40 in a step 160 by interrupt and checking the status registers 74. Off Hook status causes CPU 40 to set a dial tone bit in control register 72 for the requesting device. The CPU also receives the number of the requested or recipient device generated by the requesting device. CPU 40 makes a decision in a subsequent step 161 by accessing the directory for all devices in its node as recorded in mass storage. If the device requested is within the node, processing branches to a decision step 162 in which the CPU 40 checks the status bits in the directory for the requested device. If the status bits indicate that the requested device is busy, the control register 72 for the requesting device is set to generate a busy tone in that device in a step 163. If the requested device is not busy, processing proceeds to a step 162 in which the CPU 40 places in the control registers 72 for the requested and requesting devices states which generate a ring and ring tone respectively. At this point the CPU 40 may also load the header register for the requesting device with routing data from the directory for the requested device although this may also be accomplished after the requested device is detected in the Off Hook status. In step 164 the CPU 40 sets the ring bits in the directory status registers for both requesting and requested devices. In subsequent step 165, the CPU 40 detects the Off Hook status of the requested device with the ring bit set. The header register 70 associated with the requested device and the control register 72 for both are loaded with control data causing each controller 58 to proceed to execute block or burst transfer between queues. the CPU 40 then sets the connect bits in the directories for the two (or more) devices and drops out of operation.

In a subsequent step 166, the messages generated and received by the requesting and requested devices flow through the level two and three queues under control of the source and destination registers set by the controllers 58 and 84 in response to queue status interrupts and header register addressing data set by CPU 40. If the talking devices are entirely within a  single cluster 20, the header register addresses will result in source and destination register control that keep data flowing between the queues over a single bus 55 within that cluster.

The step 166 processing continues until the CPU 40 detects in the status register 74 on On Hook condition for one of the communicating devices in a step 167. The CPU 40 then resets the directory status bits for that device to an inactive status and proceeds to a step 174 to do accounting for the communication.

If decision step 161 indicated that the requested device was not in that node, processing proceeds to a step 168 in which the CPU 40 forwards a message, through the path governed by controller 76 for transmission to other nodes. That message identifies the originating node and requested device. All nodes respond to that message to search their directory for the requested device. The node which has the requested device within its directory and thus physically located within the node, checks the device status bits in the directory for a busy indication. If the device is busy it transmits such an indication, otherwise it transmits out over the subnetwork or network an indication of the routing to that device from its directory. The distant node then sets the ring bit in the directory and control register 72 for the requested device and transmits back a message, picked up by the originating node indicating a ringing state at the requested device in step 169. The originating CPU 40 sets the ring tone in the control register for the requesting device.

When the requested device goes Off Hook, the CPU 40 of the distant node detects that state via interrupts and the status registers 74. Detection of the Off Hook condition, with the ring bit set in step 170, causes transmission of an indication of that event over the network by the distant node CPU 40. Subsequently, in step 171 the distant node CPU 40, and the originating node CPU 40 in response to reception of the Off Hook message, both set the connect bits in the directories. At this point, or earlier, the header registers for both requesting and requested devices are set with routing information so that the block or burst transfer through the queues can proceed as noted above. The cluster controllers 58 are put into the block transfer mode initiating that form of information exchange between the devices. Subsequent step 172 corresponds to the normal communication state of step 166. One either device goes On Hook, the local CPU 40 initiates the termination procedures of step 167, in step 173.

Thereafter the processing proceeds to the accounting step 174.

The prioritizing scheme illustrated with respect to the timing diagram of Fig. 5 operates in accordance with the programmed algorithm of Fig. 7 within the controller 84 and logic 89. The algorithm of Fig. 7 implements the following data conventions :

A message packet frame is defined to include :

a header (or burst) having : 4 bytes destination subframe and 4 bytes source subframe

(Where a dest/source subframe is: (Fig. 4B)

1 byte device id

1 byte Node id

1 byte Subnet id

1 byte Net id)

1 byte type of message (or command char.)

1 byte size of transfer;

information consisting of : x bytes data; and

a trailer having : 2 bytes Cyclic Redundancy check digits (CRC-16)

At wakeup or power up each Node is in an alexic state. It is one of the functions of initialization step 179 to place a unit into a normal state giving the Node its identity. By design embedded in the hardware, each Node, or a minimum of 3 Nodes in a Subnet, will turn on with the ability (as a minimum) to read from the memory of its CPU its physical id and its profile characteristics. This permits utilization of a priority interaction between nodes. At Startup each node reads its physical id and sets a watchdog timer to a value based on its physical id.

```
id = 1 set timer to 0
id = 2 set time to .1 sec Using the transmit clock
id = 3 set time to .2 sec
id = 20 set timer to 1.9 sec
```

As the time counts down, a health message is transmitted by each node at time = 0 on the message fiber link. The time intervals for each node are extracted from the message fiber link by each of the node's message receiver circuits and is used to define the timing for the control fiber link as shown in Fig. 5. This clock and a counter is used to partition (allocate a slot) the transmit and receive time for each of the nodes on the control fiber. As each node receives a message on the message fiber link it resets the watchdog timer to its initial value. This allows for robust system action (i.e., no single point failure mechanism.)

The priority scheme after initialization starts from a state 180 and proceeds to a step 182 in which the node granted transmission authority transmits its message during the subsequent time frame 152. Each microcontroller 89 in each node also executes a step 184 in which, in the particular one of the time slots 154 assigned to that node, it transmits a request (or not) for transmission. Using the recovered clock from the message fiber link each node counts modulo 3, using their number of modulo 3 compared to its physical id as the time slot for that node to make a message bus request (i.e. id starts out followed by id 2, id 3, etc.) till the 20th time slot is noted. This provides 3 bit times for each node (hence time = 60 bits for all nodes to make or not make a message but request for the next message frame). Each time slot (3 bits) for the 1st 60bit period is defined as follows :

bit 1: Binary 1 for request for message link

Binary 0 for no request (absence of pulse)

```
             if bit 1 = Binary 1 then
                   bit 2: Binary 1 message request = voice
                        Binary 0 message request = data
             if bit 2 = Binary 0 then
                   bit 3 : Binary 1 character transfer
                        Binary 0 block transfer
```

In a subsequent step 186 each node microcontroller 84 receives the request from all the other nodes as applied on the control cable 90 of the network connector and calculates according to the same priority scheme the identity of the node next to transmit. The priority algorithm for granting a node's message request proceeds according to the following rules :

(a)   At any instance of time a voice or video (real time) request has higher priority than a data request

(b)   Two or more nodes requesting voice message transmission at the same time, the lower physical id node is granted.

(c)   Outstanding voice requests are honored as longest waiting first.

(d)   Data requests are honored after all voice or video requests have been granted.

If all nodes are operating correctly this identity will be the same from each case. In a subsequent step 188, each node transmits the identity of the node determined to be the next to transmit in the assigned one of the time slots 156 as a grant of authority. Each node in a step 190 responds to the grants of authority to determine that all nodes are granting the same node the authority to transmit in the next message frame 152 and, if the identity is the same, processing returns in a step 192 to state A with, in step 182, the granted node transmitting its message, and the request and grant sequence repeating. A failure operation 194 can be provided if the determination in step 190 is that one (or less than a majority  as an option) of the nodes fails to identify the same node as granted authority. In this case, on the basis of an indication of a system error, the system can revert to a more conventional form of time shared communication or otherwise to avoid the problem of having two nodes from an erroneous grant attempt to transmit a message in the same frame 152.

Exemplary components for implementing the system include TRW 1030 units for all queue registers, signetics 8X320 units for the header registers, a Motorola VME BUS for bus 42, a Motorola I/O channel for bus 52, 7400 series registers for the control, status, source and destination registers and character buffers, a Z8030 with a M68008 controller for the digital terminal interfacing. Other components have been noted in the text where important. The optical transmitter and receiver are conventional and have a clock recovery phase locked loop as known in the art. The four fiber optic links may be combined into one coupler using wavelength division multiplexing if desired. The registers are preferably operated in a memory mapped mode as is known in the art.

The above system provides a local area networking function in which a highly efficient  division  of system control is achieved between three levels of processor control and further in which message density is maintained at 100%. It will occur to others that improvements and modifications can be made within the scope of the invention as defined solely in the following claims.

CLAIMS

1.     A node structure for a communication system
comprising :
    a first level logical processor (18) operative
in response to indicia indicative of a desired communication recipient for generating routing indicia corresponding to the routing for communication to the desired
recipient ;
    one or more second level logical processors (20)
adapted for operation in association with one or more
sources of communication signals and responsive to routing
indicia from said first level logical processor (18) for
generating outgoing signals comprising communication
signals from an associated source and routing indicia
from said first level logical processor (18); and
    one or more third level logical processor (26)
responsive to said output signals for routing said
communication signals in accordance with the routing
indicia.

2.     The system of claim 1, further including means
for providing indicia of a desired recipient as an
interrupt signal from a source associated with a second
level logical processor (20) to said first level logical
processor (18).

3.     The system of claim 2, further including means
for controlling said second level logical processor(20)
and associated source to provide said interrupt to said
first level logical processor (18) at a character rate
of data transmission.

4.     The system of claim 1, further including means
for providing said outgoing communication signals from
said second level logical processor (20)to said third
level logical processor (26) at a data burst rate.

5.     The system of claim 4, further including :
    means (23) for queuing the outgoing communication signals between said second level logical processor (20) and said third level logical processor (26).

6. The system of claim 5, further including means associated with said third level logical processor (26) for routing said outgoing communication signals over a fiber optical coupler system (14) in communication with one or more additional node structures(12).

7. The system of claim 6, further including means for prioritizing the communication of one node with respect to another node over said fiber optic coupler (14).

8. The system of claim 7, wherein said prioritizing means comprises :

means for establishing a control signal exchange over a fiber optic coupler (14) comprising a repeating sequence of transmitted requests for transmission of an outgoing communication signal on said fiber optic coupler, one from each node (12) associated with said fiber optic coupler (14), alternating with a repeating sequence of grants, one from each node (12) associated with said fiber optic coupler (14), and indicating the identity of the node (12) next to transmit over said fiber optic coupler (14);

means for transmitting said outgoing communication signals over said fiber optic coupler network (14) from the node identified in the preceding sequence of grant signals; and

means for determining the grants at each node structure (12) in accordance with the same priority scheme, awarding the grant to the node having waited the longest time since its last opportunity to transmit.

9. The system of claim 8 wherein :

said means for determining grants provides priority to real time communication; and

said requests identify whether the message waiting at each corresponding node is a real time communication.

10.    The system of claim 1, wherein said signal sources with which a second level logical processor (20) is associated are selected from the class comprising voice and data signals.

11.    The system of claim 10, further including means responsive to signal sources of a voice signal transmitting capability for digitizing said signals whereby the generated outgoing communication signals comprise digital counterparts of the source generated voice signals as said communication signal.

12.    The system of claim 1, wherein :

said one or more third level logical processors (26) are adapted to receive signals applied to them as outgoing communication signals from a second level logical processor (20) or other node structure and to apply said communication signals to a second level logical processor (20) having associated with it a source identified as a recipient in the routing indicia at said third level logical processor (26); and

means associated with said first level processor (18) are provided for adapting said one or more second level logical processors (20) to apply to a source associated therewith the communication signals received from a third level logical processor (26).

13.    The system of claim 6, wherein said optical coupler (14) includes a passive star (16).

14.    The system of claim 1, further including :

a plurality of queues (53) coupled by a data bus (55) and associated with a second level logical processor (58) and one or more signal sources; and

means for directing communication signals between said queues (3) in accordance with said routing indicia.

15.    The system of claim 14, further including :

a plurality of said second level logical processor data buses (55) each associated with a separate second level logical processor (58) and a plurality of signal

25 0185122

sources to provide plural clusters of second level logical processors (58) and signal sources; and

a plurality of queues (80) operative under routing indicia control for communicating between each cluster through said third level processor (84).

16. The system of claim 14, further including :

a control bus (56); and

a source/destination register (79) associated with each cluster and controlled by a second level logical processor (58) over said control bus (56) to identify the flow of communication signals between said queues (80) as a function of said routing indicia.

17. The system of claim 1, further including a directory associated with said first level logical processor (18) identifying routing indicia corresponding to a desired communication recipient.

18. The system of claim 11, wherein said digitizing means is selectively logarithmic in its transfer function between voice signal and digital counterpart.

19. A communication priority scheme for communication between a plurality, greater than three, of communication centers over a channel coupling network comprising :

three or more communication centers (12) each capable of receiving and transmitting data;

a communication coupler (14) capable of supporting communication between one such communication center (12) and another such communication center (12);

a control channel linking said three or more communication centers (12);

means associated with each of said communication centers (12) for transmitting over said control channel a repeating sequence of requests for transmission, one associated with each of said communication centers, alternating with a repeating sequence of grants of communication to an identifiable communication center;

means associated with each communication center (12) for identifying the communication center next to transmit in response to information received in the previous requests for communication, that determination were being made at each communication center according to the same priority algorithm; and

the communication center identified in the preceeding set of grants communicating a message over the coupling system until a subsequent grant to a different communication center is transmitted over said control network.

20. The priority system of claim 19, wherein said communication coupler (14) comprises an optical fiber communication coupled having a passive star coupler (16).

21. The priority system of claim 19, wherein each communication center (12) is operative to provide in each request for communication an identification of the communication type as real time communication or not.

22. The priority system of claim 21, wherein said priority algorithm gives precedence to requests for real time communication.

23. A node architecture for a communication system comprising :

plural signal originating and receiving sources and an associated logical processor (20);

a hierarchically superior logical processor (18) and associated source directory, having source routing indicia;

a plurality of block transfer registers (23) for the flow of signals between said sources;

means associated with a logical processor (20) for controlling the transferring of signals in blocks between said registers (23) in response to routing indicia; and

0185122

said superior logical processor (18) operative to provide said routing indicia from said directory for use by said logical processor (20).

24.     The node architecture of claim 23, further including :

a hierarchically inferior logical processor (26) and associated plural additional block transfer registers (23); and

means for enabling said plural additional block transfer registers (29) to selectively participate in the block transfer of signals between sources under control of said inferior logical processor (26).

25.     The architecture of claim 24, wherein the signal flow speed of block transfers between registers (23) increases inversely with hierarchical processor level.

26.     A process for node based information flow comprising :

generating routing indicia at a first level logical processor (18) in response to indicia indicative of a desired communication recipient;

generating outgoing signals at a second level logical processor (20) adapted for operation in association with one or more sources of communication signals in response to routing indicia from said first level logical processor (18), said outgoing signals comprising communication signals from the associated source and routing indicia from said first level logical processor (18); and

routing said communication signals at a third level logical processor (26) in accordance with the routing indicia.

27.     The process of claim 26, further including the step of providing an interrupt signal from a source to said first level logical processor (18) indicative of a desired communication recipient associated with a second level logical processor (20).

28.    The process of claim 27, wherein said interrupt is provided to said first level logical processor (18) at a character rate.

29.    The process of claim 28, wherein said outgoing signals are provided at a data burst rate.

30.    The process of claim 26, further including the step of :

queuing the outgoing signals from said second level logical processor (20) to said third level logical processor (26) for block transfer.

31.    The process of claim 30, further including the step of :

routing said outgoing signals over a network comprising a fiber optical coupler system (14) in communication with one or more additional nodes (12).

32.    The process of claim 31, further including the step of prioritizing the communication of one node (12) with respect to another node (12) over said fiber optic coupler.

33.    The process of claim 32, wherein said prioritizing step comprises the steps of :

establishing a control signal exchange over a fiber optic coupler (14) comprising a repeating sequence of transmitted requests for transmission of an outgoing signal on said fiber optic coupler (14), one from each node (12) associated with said fiber optic coupler (14), alternating with a repeating sequence of grants, one from each node associated with said fiber optic coupler (14), and indicating the identity of the node next to transmit over said fiber optic coupler (14);

transmitting said outgoing signal over said fiber optic coupler network (14) from the node identified in the preceding sequence of grant signals;

determining the grants at each nodal station in accordance with the same priority scheme, awarding the grant to the node having waited the longest time since its last opportunity to transmit.

34.     The process of claim 33 wherein :

said step of identifying grants provides priority to real time communication; and

said requests identify whether the message waiting at each corresponding node is real time communication.

35.     The process of claim 26, further including digitizing source signals whereby the generated outgoing signals comprise digital counterparts of the source generated signals as said communication signals.

36.     A communication priority method for communication between a plurality greater than three of communication centers over a single channel coupling network comprising:

transmitting over a control channel a repeating sequence of requests for transmission, one associated with each of plural communication centers, alternating with a repeating sequence of grants of communication authority to an identifiable communication center;

identifying the communication center to be granted authority next to transmit in response to information received in the previous request for communication, that determination were being made at each communication center according to the same priority algorithm; and

communicating a message from the communication center identified in the preceding set of grants over a coupling system until a subsequent grant to a different communication center is transmitted over said control network.

37.     The priority method of claim 36, wherein said priority algorithm gives precedence to requests for real time communication.

*Fig. 1*

0185122

Fig. 2

Fig. 3

## Fig. 4A

SUBNET

DEVICE — NODE — NODE — DEVICE
DEVICE — NODE — C — NODE — DEVICE
DEVICE — NODE — NODE — DEVICE

SUBNET

DEVICE — NODE — NODE — DEVICE
DEVICE — NODE — C — NODE — DEVICE
DEVICE — NODE — NODE — DEVICE

NETWORK

*Fig. 4A*

| DEVICE | NODE | SUBNET | NET |
|--------|------|--------|-----|

*Fig. 4B*

SYMBOLIC REQUEST    DEVICE ADDRESS IN NODE    BUSY, RING, CONNECT STATUS

*Fig. 4C*

MSG (VOICE
VIDEO DATA)    MSG (T-1)    152    MSG (T)    150

CONTROL    R-1 | R-2 | ... | R-N-1 | R-N | G-1 | G-2 | ... | G-N-1 | G-N | R-1 | R-2 | ...

154    154    156    156

T    T+1

*Fig. 5*

```
┌─────────────────────┐
│      LEVEL 1        │──160
│     OFF HOOK       │
│  DETECT AND RECEIVE │
│   RECIPIENT NO.    │
└─────────────────────┘
          │
          ▼
      ╱─────────╲  161
     ╱   IS      ╲     NO
    ╱  RECIP.     ╲─────────────────────────────┐
    ╲  IN NODE    ╱                              │
     ╲           ╱                               │
      ╲─────────╱                                │
          │ YES                                  │
          ▼                                      │
┌────────┐  ╱─────────╲ 162                      │
│  SET   │ ╱   IS      ╲                         │
│  CONT  │◄╱  RECIP.   ╲                         │
│  REG   │ ╲  BUSY     ╱  YES                    │
└────────┘  ╲         ╱                          │
  163        ╲───────╱                           │
                │ NO                             │
                ▼                                ▼
┌─────────────────────┐          ┌─────────────────────┐
│    LOAD HDR REG     │          │   BROADCAST MSG ON  │
│   FOR INITIATING    │──164     │    SUBNET, NET     │──168
│   WITH RECIP AND    │          ├─────────────────────┤
│   LOAD CONT REG     │          │  NODE WITH RECIP    │
│   FOR RECIP TO RING │          │  SENDS BACK ROUTING │
└─────────────────────┘          │  MSG AFTER MAKING   │
          │                      │  161, 162 TEST OR   │
          ▼                      │  SENDS BACK BUSY MSG│
┌─────────────────────┐          └─────────────────────┘
│   DETECT RECIP      │                    │
│   OFF HOOK WITH     │                    ▼
│   RING BIT SET      │          ┌─────────────────────┐
│   LOAD HDR REG OF   │──165     │     IF NOT BUSY     │
│   RECIP WITH        │      169 │   DISTANT NODE SET  │
│   INITIATING ADDRESS│          │   RING BIT OF RECIP │
├─────────────────────┤          │   & SENDS RING MSG  │
│   PLACE BOTH IN BURST│         └─────────────────────┘
│   MODE              │                    │
│   SET CONNECT BITS IN│                   ▼
│   BOTH LEVEL 1 DROPS│          ┌─────────────────────┐
└─────────────────────┘          │   DISTANT NODE      │
          │                      │   XMITS OFF HOOK    │
          ▼                  170 │   AFTER DETECT      │
┌─────────────────────┐          │   OFF HOOK WITH     │
│   RECIP &  INIT     │          │   RING BIT SET      │
│   DEVICES LOAD Q's  │          └─────────────────────┘
│   LEVEL 2 & 3       │──166               │
│   CONTROLLERS SET   │                    ▼
│   SOURCE & DEST REG │          ┌─────────────────────┐
│   ON BASIS OF Q     │      171 │   BOTH NODES PUT    │
│   INTERUPTS FOR     │          │   DEVICES INTO      │
│   Q TO Q BURST      │          │   BURST MODE        │
└─────────────────────┘          └─────────────────────┘
          │                               │
          ▼                      172 ┌─────────────────┐
┌─────────────────────┐              │    STEP 166     │
│      LEVEL 1        │              └─────────────────┘
│    ON HOOK DETECT   │──167                  │
├─────────────────────┤                       ▼
│   RESET DIRECTORY   │          ┌─────────────────────┐
│   TO NO ACTIVITY    │      173 │     ON HOOK         │
└─────────────────────┘          │   FOLLOWS 167       │
          │                      │   BUT USING         │
          │                      │   MSG XFER          │
          │                      └─────────────────────┘
          │                               │
          └───────────────┬───────────────┘
                          ▼
              ┌─────────────────────┐
              │   NODES EXECUTE     │──174
              │   CALL ACCOUNTING   │
              └─────────────────────┘
```

*Fig. 6*

INITIALIZE 179

A 180

NODE JUST GRANTED
TRANSMISSION ATHORITY
TRANSMITS MESSAGE 182

NODES TRANSMIT IN
TURN R1 - RN REQUESTS
INCLUDING
PRIORITY & TYPE 184

NODES RECEIVE REQUESTS
AND CACULATE NEXT SOURCE
TO TRANSMIT USING SAME
PRIORITY ALGORITHM 186

NODES TRANSMIT GRANTS
IN G1 - GN ASSIGNMENTS 188

FAILURE MODE
HALF SPEED 194

NOT SAME

NODES DETERMINE
IDENTICAL GRANTS
AND ID OF GRANTEE 190

SAME

RETURN
TO A 192

*Fig. 7*

**0185122**

European Patent
Office

**EUROPEAN SEARCH REPORT**

Application number

EP 84 40 2352

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | LOCAL NETWORKS FOR COMPUTER COMMUNICATIONS IFIP 1981, pages 25-41, North-Holland Pub. Co., Amsterdam, NL; E.H. ROTHAUSER et al.: "Meshed-star networks for local communication systems" * Page 26, paragraph 2; page 37, paragraph 5 * | 1,2,4-7,12, 14,17, 23-27, 30-32 | H 04 L 11/16 |
| A | Idem | 8,13, 19-22, 29 | |
| | --- | | |
| A | COMPUTER DESIGN, vol. 22, no. 12, fall 1983, pages 14-18, Winchester, Massachusetts, US; N. MOKHOFF: "Fiber optic LANs may eliminate future bottlenecks in office communications" * Page 17, left-hand column, line 11 - right-hand column, end * | 6,13, 19,20, 31,33-35 | |
| | | | **TECHNICAL FIELDS SEARCHED (Int Cl 4)** |
| | --- | | H 04 L |
| A | GB-A-2 069 734 (PHILIPS) * Page 1, line 5 - page 2, line 45; page 3, lines 30-64; page 6, line 11 - page 8; page 17, lines 10-64; page 23, lines 15-45 * | 1-6,14 -16,23 ,26-31 | |
| | ---     -/- | | |

The present search report has been drawn up for all claims

| Place of search | Date of completion of the search | Examiner |
|---|---|---|
| THE HAGUE | 26-04-1985 | GERLING J.C.J. |

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 985 962 (JONES et al.)<br><br>* Column 1, line 51 - column 2, line 11; claim 1 * | 19,21, 22,36, 37 | |
| A | | 7,9 | |
| A | AFIPS CONFERENCE PROCEEDINGS, Chicago, 4th-7th May 1981, pages 169-176, AFIPS Press, Arlington, US; D. COHEN: "Packet communication of online speech" | 10,11, 18 | |
| | | | TECHNICAL FIELDS SEARCHED (Int. Cl 4) |

The present search report has been drawn up for all claims

| Place of search | Date of completion of the search | Examiner |
|---|---|---|
| THE HAGUE | 26-04-1985 | GERLING J.C.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82